# EUROPÄISCHE PATENTSCHRIFT

(11) **EP 0 631 454 B1**
(45) Veröffentlichungstag und Bekanntmachung des Hinweises auf die Patenterteilung: **25.08.1999**
(21) Anmeldenummer: 93110217.2
(22) Anmeldetag: 25.06.1993
(51) Int. Cl.: H04L 12/56, H04Q 11/04

(54) **Verfahren zum Einrichten von virtuellen Verbindungen in Paketvermittlungsnetzen**
Method for establishing virtual connections in packet switching networks
Méthode pour créer des connections virtuelles dans des réseaux de commutation de pacquets

(43) Veröffentlichungstag der Anmeldung: 28.12.1994
(73) Patentinhaber: SIEMENS AKTIENGESELLSCHAFT, 80333 München (DE)
(72) Erfinder: Obermanns, Sebastian, Dipl.-Phys., D-80689 München (DE); Schoonhoven, Richard, Dipl.-Ing., D-82140 Olching (DE)

(56) Entgegenhaltungen:
- DE-A- 4 128 938
- US-A- 4 348 554
- US-A- 4 802 199
- GLOBECOM '89 27. November 1989 , DALLAS Seiten 539 - 542 XP91154 L.H.EBERL, P. CHEN 'Integrated ISDN D-server for intelligent networking'
- PATENT ABSTRACTS OF JAPAN Bd. 017, Nr. 104 (E-1328) 03 März 1993 & JP-A-04 291 595 (FUJITSU LTD) 15 Oktober 1992
- A. BONUCCELLI: "Minimum Fragmentation Internetwork Routing", IEEE INFOCOM 1991, NETWORKING IN THE 90S, , 7. APRIL 1, Band , Nr. , Seiten 289 - 294

## Beschreibung

Die Erfindung betrifft ein Verfahren zum Einrichten von virtuellen Verbinaungen gemäß Oberbegriff des Patentanspruches 1.

Ein derartiges Verfahren ist bereits aus der deutschen Offenlegungsschrift DE 41 28 938 A1 bekannt. Bei diesem bekannten Verfahren wird ein anstehendes Rufpaket bei Nichtvorhandensein eines Verbindungsweges innerhalb eines ersten Paketvermittlungsnetzes für einen Verbindungsaufbau über das zweite Paketvermittlungsnetz in modifizierter Form zu einer ersten Netzübergangsstelle hin übertragen. In diesem modifizierten Rufpaket ist neben einem Adressenfeld ein Adressenerweiterungsfeld vorgesehen, in welchem eine eine zweite Netzübergangsstelle bezeichnende Adresseninformation eingetragen ist. Darüber hinaus ist eine Markierungsinformation gesetzt. An der betreffenden ersten Netzübergangsstelle werden die in dem Adressenfeld und dem Adressenerweiterungsfeld des modifizierten Rufpaketes enthaltenen Adresseninformationen gegeneinander ausgetauscht. Anschließend wird nach Maßgabe der nunmehr in dem Adressenfeld des modifizierten Rufpaketes enthaltenen, die betreffende zweite Netzübergangsstelle bezeichnenden Adresseninformation innerhalb des zweiten Paketvermittlungsnetzes ein Verbindungsweg zu der zweiten Netzübergangsstelle hin festgelegt und das modifizierte Rufpaket dorthin weitergeleitet. An der zweiten Netzübergangsstelle werden die in dem zugehörigen Adressenfeld und Adressenerweiterungsfeld enthaltenen Adresseninformationen aufgrund der in dem modifizierten Rufpaket gesetzten Markierungsinformation wieder gegeneinander ausgetauscht. Nach Maßgabe der nunmehr in dem Adressenfeld des modifizierten Rufpaketes enthaltenen, die gerufene Teilnehmereinrichtung bezeichnenden Adresseninformation wird dann innerhalb des ersten Paketvermittlungsnetzes die gerade gewünschte virtuelle Verbindung zu der in Frage kommenden gerufenen Teilnehmereinrichtung eingerichtet.

Das bekannte Verfahren setzt, wie vorstehend angegeben, voraus, daß von dem zweiten Paketvermittlungsnetz her das Leistungsmerkmal "Adressenerweiterung" unterstützt wird. Ein solches Leistungsmerkmal kann jedoch nicht in jedem Paketvermittlungsnetz vorausgesetzt werden.

Es ist nun Aufgabe der vorliegenden Erfindung, einen Weg zu zeigen, wie bei einem Verfahren gemäß Oberbegriff des Patentanspruches 1 ein Verbindungsweg unter Einbeziehung des zweiten Paketvermittlungsnetzes festgelegt werden kann, ohne daß von diesem zweiten Paketvermittlungsnetz her bezüglich der Signalisierungsprozedur bestimmte Leistungsmerkmale unterstützt werden müssen.

Gelöst wird diese Aufghabe durch die im Patentanspruch 1 aufgeführten Verfahrensmerkmale.

Der Vorteil der Erfindung besteht dabei darin, daß für die Festlegung eines Ersatzweges innerhalb des zweiten Paketvermittlungsnetzes zunächst eine virtuelle Verbindung unter Verwendung einer für dieses Paketvermittlungsnetz festgelegten Signalisierungsprozedur vollständig aufgebaut wird und erst bei bestehender Verbindung die für einen Verbindungsaufbau zwischen einer rufenden und gerufenen Teilnehmereinrichtung des ersten Paketvermittlungsnetzes erforderlichen Signalisierungspakete transparent über den Ersatzweg übertragen werden, so daß an die Signalisierungsprozedur innerhalb des zweiten Paketvermittlungsnetzes keinerlei spezielle Anforderungen gestellt werden, sondern vielmehr in diesem Paketvermittlungsnetz jede beliebige Signalisierungsprozedur realisiert sein kann.

Vorteilhafte Ausgestaltungen der Erfindung ergeben sich aus den Unteransprüchen.

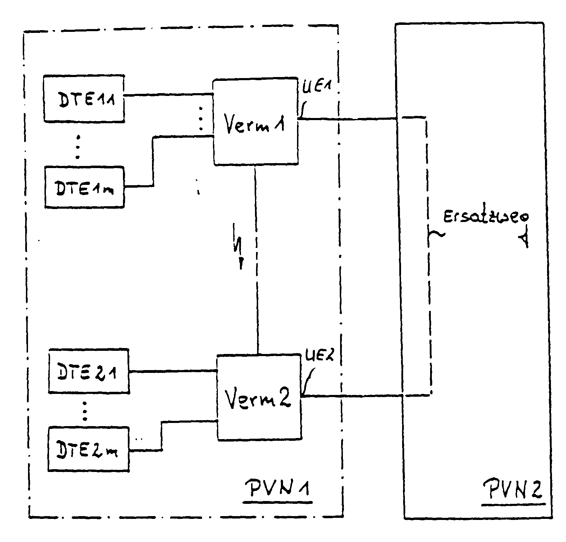

Im folgenden wird nun die Erfindung anhand einer Zeichnung beispielsweise näher erläutert.
Die Zeichnung zeigt in einem Blockschaltbild über Netzübergänge miteinander verbundene Paketvermittlungsnetze, bei denen die vorliegende Erfindung angewandt ist.

In der Zeichnung sind zwei gesonderte Paketvermittlungsnetze PVN1 und PVN2 dargestellt, die über Netzübergangsstellen UE1 und UE2 miteinander verbunden sind. Bei dem Paketvermittlungsnetz PVN1 möge es sich dabei beispielsweise um ein privates Paketvermittlungsnetz, bei dem Paketvermittlungsnetz PVN2 dagegen um ein öffentliches Paketvermittlungsnetz handeln. Dem Paketvermittlungsnetz PVN1 seien dabei wenigstens eine Vermittlungseinrichtung Verm1 sowie eine Vermittlungseinrichtung Verm2 zugehörig, an welche jeweils eine Mehrzahl von Teilnehmereinrichtungen angeschlossen sein mag. Diese Teilnehmereinrichtungen sind dabei entsprechend ihrer Zugehörigkeit zu den beiden Vermittlungseinrichtungen mit DTE11 bis DTE1m bzw. mit DTE21 bis DTE2m bezeichnet. Zwischen diesen Teilnehmereinrichtungen und der zugehörigen Vermittlungseinrichtung erfolgt beispielsweise jeweils eine Übertragung von dem Aufbau von virtuellen Verbindungen dienenden Signalisierungspaketen und Datenpaketen bei bestehenden virtuellen Verbindungen gemäß der CCITT-Empfehlung X.25. Entsprechend dieser CCITT-Empfehlung mögen auch über die beiden zuvor genannten Netzübergangsstellen UE1 und UE2 Signalisierungspakete und Datenpakete zwischen den beiden Paketvermittlungsnetzen PVN1 und PVN2 ausgetauscht werden.

Die beiden Vermittlungseinrichtungen Verm1 und Verm2, die jeweils sowohl Ursprungs- als auch Zielvermittlungsfunktionen erfüllen können, stehen über eine oder mehrere Verbindungsleitungen miteinander in Verbindung, wobei diese Verbindungsleitungen ggf. über Transitvermittlungsstellen geführt werden können. Die Übertragung von Signalisierungs- und Datenpaketen zwischen diesen beiden Vermittlungseinrichtungen erfolgt dabei beispielsweise nach einem Trunkprotokoll in Anlehnung an die CCITT-Empfehlung X.25.

Nachdem zuvor der prinzipielle Aufbau des Paketvermittlungsnetzes PVN1 sowie dessen Kopplung mit dem Paketvermittlungsnetz PVN2 erläutert worden sind, wird nunmehr auf das erfindungsgemäße Verfahren näher eingegangen. Dazu sei als Beispiel angenommen, daß eine virtuelle Verbindung von der Teilnehmereinrichtung DTE11 zu der Teilnehmereinrichtung DTE21 lediglich unter Einbeziehung der Vermittlungseinrichtungen Verm1 und Verm2 eingerichtet werden soll. Für diesen Verbindungsaufbau wird von der rufenden Teilnehmereinrichtung DTE11 her ein Rufpaket ("call request") entsprechend der CCITT Empfehlung X.25 zu der Vermittlungseinrichtung Verml hin übertragen. In einem Adressenfeld dieses Rufpaketes ist dabei eine Adresseninformation enthalten, durch welche die Teilnehmereinrichtung DTE21 als gerufene Teilnehmereinrichtung bezeichnet ist. Nach Maßgabe dieser Adresseninformation erfolgt dann von der Vermittlungseinrichtung Verm1 her eine Wegesuche nach einem geeigneten Verbindungsweg innerhalb des Paketvermittlungsnetzes PVN1 für die gerade einzurichtende virtuelle Verbindung. Ist ein solcher Verbindungsweg festgelegt, so erfolgt der weitere Verbindungsaufbau durch Austausch von festgelegten Signalisierungspaketen zwischen den Vermittlungseinrichtungen Verm1 und Verm2 und den an der gerade aufzubauenden virtuellen Verbindung beteiligten Teilnehmereinrichtungen DTE11 und DTE21.

Tritt bei der gerade erwähnten Wegesuche dagegen der Fall ein, daß beispielsweise aufgrund einer Unterbrechung der zwischen den Vermittlungseinrichtungen Verm1 und Verm2 vorgesehenen Verbindungsleitung bzw. Verbindungsleitungen kein geeigneter Verbindungsweg innerhalb des Paketvermittlungsnetzes PVN1 zu der gerufenen Teilnehmereinrichtung DTE21 hin festgelegt werden kann, so wird, wie im folgenden erläutert werden wird, ein Ersatzweg unter Einbeziehung des Paketvermittlungsnetzes PVN2 ausgewählt. Für die Auswahl eines solchen Ersatzweges wird das von der Vermittlungseinrichtung Verm1 empfangene Rufpaket zu der Netzübergangsstelle UE1 hin übertragen und dort festgehalten, d. h. zwischengespeichert. Auf dieses Rufpaket hin wird dann von dieser Vermittlungseinrichtung, d.h. von der Netzübergangsstelle UE1, aus der Aufbau einer gesonderten virtuellen Verbindung innerhalb des zweiten Paketvermittlungsnetzes PVN2 zu der Netzübergangsstelle UE2 initiiert, und zwar entsprechend der für das zweite Paketvermittlungsnetz PVN2 festgelegten Signalisierungsprozedur. Hierzu wird zunächst ein gesondertes Rufpaket zu einer mit der Netzübergangsstelle UE1 verbundenen Vermittlungseinrichtung des Paketvermittlungsnetzes PVN2 übertragen. Im Adressenfeld dieses gesonderten Rufpaketes ist dabei eine die Netzübergangsstelle UE2 bezeichnende Adresseninformation enthalten, welche in der Datenbasis der Vermittlungseinrichtung Verm1 hinterlegt ist. In der betreffenden Vermittlungseinrichtung des Paketvermittlungsnetzes PVN2 erfolgt dann nach Maßgabe der in dem Adressenfeld enthaltenen Adresseninformation eine Wegesuche für einen geeigneten Verbindungsweg zu der Netzübergangsstelle UE2 hin. Nach Festlegung eines solchen Verbindungsweges wird eine virtuelle Verbindung innerhalb des Paketvermittlungsnetzes PVN2 zwischen den Netzübergangsstellen UE1 und UE2, d. h. zwischen den Vermittlungseinrichtungen Verm1 und Verm2, vollständig entsprechend der für das Paketvermittlungsnetz PVN2 vorgesehenen Signalisierungsprozedur eingerichtet. Im Anschluß daran wird das in der Vermittlungseinrichtung Verm1, d.h. an der Netzübergangsstelle, zunächst festgehaltene Rufpaket als Nutzinformation in ein Datenpaket eingefügt, welches im Zuge der gerade eingerichteten virtuellen Verbindung über das Paketvermittlungsnetz PVN2 zu der Vermittlungseinrichtung Verm2 des Paketvermittlungsnetzes PVN1 übertragen wird. Dieses Rufpaket wird also innerhalb des Paketvermittlungsnetzes PVN2 transparent übertragen. Im übrigen wird für den Fall, daß die Länge eines Datenpaketes nicht ausreichend für eine vollständige Übertragung des Rufpaketes ist, dieses segmentiert. Die einzelnen Segmente werden dann in einer Mehrzahl von Datenpaketen in der genannten Weise transparent innerhalb des Paketvermittlungsnetzes PVNZ übertragen.

Nach einer Depaketierung des betreffenden Datenpaketes durch die Vermittlungseinrichtung Verm2 wird von dieser nach Maßgabe der in dem als Nutzinformation übertragenen Rufpaket enthaltenen Adresseninformation, durch welche die gerufene Teilnehmereinrichtung DTE21 bezeichnet ist, ein entsprechend der CCITT-Empfehlung X.25 generiertes, einen ankommenden Ruf anzeigendes Signalisierungspaket zu dieser Teilnehmereinrichtung hin übertragen. Auf den Empfang dieses Signalisierungspaketes hin generiert die gerufene Teilnehmereinrichtung DTE21 ein Rufbestätigungspaket ("Call accepted"),
welches der rufenden Teilnehmereinrichtung DTE11 über den zuvor festgelegten, über das Paketvermittlungsnetz PVN2 verlaufenden Ersatzweg zugeführt wird. Dabei erfolgt auch die Übertragung des Rufbestätigungspaketes transparent in einem oder mehreren Datenpaketen der innerhalb des Paketvermittlungsnetzes PVN2 eingerichteten virtuellen Verbindung. Damit ist dann der Aufbau einer virtuellen Verbindung zwischen den als Beispiel angenommenen Teilnehmereinrichtungen DTE11 und DTE21 abgeschlossen. Im Anschluß daran wird die Übertragung von Datenpaketen zwischen diesen Teilnehmereinrichtungen aufgenommen. Auch hier werden die zunächst in dem Paketvermittlungsnetz PVN1 auftretenden Datenpakete für die Übertragung innerhalb des Paketvermittlungsnetzes PVN2 in Datenpakete der Ersatzverbindung eingefügt und somit transparent innerhalb des Paketvermittlungsnetzes PVN2 übertragen. Dabei werden die ursprünglichen Datenpakete gegebenenfalls ebenfalls segmentiert.

Entsprechende Steuerungsvorgänge laufen auch für alle übrigen aufzubauenden virtuellen Verbindungen zwischen Teilnehmereinrichtungen des Paketvermittlungsnetzes PVN1 ab, falls für diese virtuellen Verbindungen ein Ersatzweg über das Paketvermittlungsnetz PVN2 festzulegen ist.

Bei dem zuvor erläuterten Beispiel kann auch der Fall eintreten, daß in einem gemäß der CCITT-Empfehlung X.25 vorgesehenen Dienstefeld eines der Vermittlungseinrichtung Verm1 zugeführten Rufpaketes Informationen über geforderte netzspezifische Leistungsmerkmale des Paketvermittlungsnetzes PVN1 enthalten sind, die zu der bei dem angenommenen Beispiel als Zielvermittlungseinrichtung dienenden Vermittlungseinrichtung Verm2 bzw. zu der gerufenen Teilnehmereinrichtung DTE21 hin zu übertragen sind. Diese Diensteinformationen werden mit dem Rufpaket innerhalb des Paketvermittlungsnetzes PVN2 transparent übertragen, d. h. es erfolgt dort keine Auswertung der in dem Rufpaket enthaltenen Diensteinformationen. Eine Auswertung erfolgt erst in der Vermittlungseinrichtung Verm2 des Paketvermittlungsnetzes PVN1 bzw. in der Teilnehmereinrichtung DTE21.

Vorstehend wurde davon ausgegangen, daß die Netzübergangsstellen UE1 und UE2 in den Ursprungs- und Zielvermittlungseinrichtungen Verm1 und Verm2 vorgesehen sind. Zusätzlich oder alternativ dazu können diese Netzübergangsstellen aber auch in Transitvermittlungseinrichtungen des Paketvermittlungsnetzes PVN1 eingerichtet sein. In diesem Falle wird bei dem angenommenen Beispiel ein in der Vermittlungseinrichtung Verm1 eintreffendes Rufpaket zu einer für die geforderte virtuelle Verbindung in Frage kommenden Transitvermittlungsstelle weitergeleitet. Wird von dieser dann festgestellt, daß ein Ersatzweg über das Paketvermittlungsnetz PVN2 einzurichten ist, so wird das vorliegende Rufpaket an der Netzübergangsstelle zunächst festgehalten und in der oben angegebenen Weise eine virtuelle Verbindung zu einer für den Wiedereintritt in das Paketvermittlungsnetz PVN1 vorgesehenen Netzübergangsstelle hin eingerichtet. Eine Adresseninformation bezüglich dieser Netzübergangsstelle, die in einer weiteren Transitvermittlungseinrichtung oder einer Zielvermittlungseinrichtung (Verm2) liegen kann, ist in der Datenbasis der betreffenden Transitvermittlungseinrichtung gespeichert.

Das zuvor beschriebene Verfahren zur Einrichtung von virtuellen Verbindungen ist bei dem vorliegenden Ausführungsbeispiel so ausgebildet, daß eine zunächst über einen Ersatzweg unter Einbeziehung des Paketvermittlungsnetzes PVN2 geführte virtuelle Verbindung bei Wiederverfügbarkeit eines Verbindungsweges innerhalb des Paketvermittlungsnetzes PVN1 über diesen internen Verbindungsweg weitergeführt wird. Hierzu ist die Tatsache, daß eine virtuelle Verbindung über einen Ersatzweg geführt ist, in den Vermittlungseinrichtungen des Paketvermittlungsnetzes PVN1 gesondert festgehalten. Bei dem oben erläuterten Beispiel handelt es sich also dabei z. B. um die mit der Netzübergangsstelle UE1 verbundene Vermittlungseinrichtung Verm1 bzw. Transitvermittlungseinrichtung. Liegen nun in dieser Vermittlungseinrichtung Informationen vor, daß die zuvor ausgefallene Verbindungsleitung innerhalb des Paketvermittlungsnetzes PVN1 wieder betriebsbereit ist, so wird die zuvor beschriebene, über einen Ersatzweg des Paketvermittlungsnetzes PVN2 zwischen den Netzübergangsstellen UE1 und UE2 geführte virtuelle Verbindung zwischen Ursprungs- und Zielvermittlungseinrichtung des Paketvermittlungsnetzes PVN1, d.h. hier zwischen den Vermittlungseinrichtungen Verm1 und Verm2, ausgelöst. Die zwischen diesen Vermittlungseinrichtungen und den an der betreffenden virtuellen Verbindung beteiligten Teilnehmereinrichtungen, hier den Teilnehmereinrichtungen DTE11 und DTE21, bestehenden virtuellen Teilverbindungen sind von diesem Auslösen nicht berührt. Im Anschluß daran wird im Zuge einer erneuten Wegesuche nach Maßgabe der in der Vermittlungseinrichtung Verml noch für die gerufene Teilnehmereinrichtung DTE21 gespeicherten Adresseninformation ein Verbindungsweg innerhalb des Paketvermittlungsnetzes PVN1 zu der mit der gerufenen Teilnehmereinrichtung verbundenen Vermittlungseinrichtung, hier zu der Vermittlungseinrichtung Verm2, hin festgelegt und über diesen ein entsprechendes Rufpaket übertragen.

Dieses Rufpaket enthält dabei ein Dienstsignal, durch welches der Vermittlungseinrichtung Verm2 angezeigt wird, daß lediglich eine bereits über einen Ersatzweg geführte virtuelle Verbindung wieder einzurichten ist, d. h. daß dieses Rufpaket nicht zu der gerufenen Teilnehmereinrichtung hin zu übertragen ist. Auf den Empfang dieses Rufpaketes hin erfolgt dann ein Austausch von Signalisierungspaketen innerhalb des Paketvermittlungsnetzes PVN1 zwischen den Vermittlungseinrichtungen Verm1 und Verm2, um die zuvor kurzzeitig unterbrochene virtuelle Verbindung zwischen den Teilnehmereinrichtungen DTE11 und DTE21 wieder vollständig herzustellen.

Durch die zuvor erläuterte Wiedereinrichtung einer virtuellen Teilverbindung innerhalb des Paketvermittlungsnetzes PVN1 und das damit verbundene kurzzeitige Teilauslösen der bisherigen Verbindung kann der Fall eintreten, daß noch nicht sämtliche von der Vermittlungseinrichtung Verm1 her abgegebenen Datenpakete von der Vermittlungseinrichtung Verm2 aufgenommen worden sind. Damit weist ein in der Vermittlungseinrichtung Verm1 für die virtuelle Verbindung geführter Sendezähler einen von den in der Vermittlungseinrichtung Verm2 geführten zugehörigen Empfangszähler abweichenden momentanen Zählerstand auf. Dieser momentane Zählerstand entspricht in bekannter Weise der Sequenznummer des im Zuge der virtuellen Verbindung zuletzt gesendeten bzw. als nächstes empfangenen Datenpaketes. Ein Ausgleich dieser momentanen Zählerstände wird bei dem vorliegenden Ausführungsbeispiel dadurch erreicht, daß Angaben bezüglich des Zählerstandes des in der Vermittlungseinrichtung Verm2 geführten Empfangszählers in einem den Aufbau der genannten Teilverbindung abschließenden Rufbestätigungspaket ("Call accepted") zu der Vermittlungseinrichtung Verm1 hin übertragen wird, beispielsweise in einem Benutzerdatenfeld dieses Rufbestätigungspaketes.

Von der Vermittlungseinrichtung Verm1 wird dann die Übertragung von Datenpaketen mit demjenigen Datenpaket fortgesetzt, dessen Sequenznummer dem gerade mitgeteilten Zählerstand entspricht. Wenn durch das zuvor erläuterte kurzzeitige Teilauslösen einer bestehenden virtuellen Verbindung nicht sämtliche von der Vermittlungseinrichtung Verm1 gesendeten Datenpakete in der Vermittlungseinrichtung Verm 2 eingetroffen sind, werden also die verlorengegangenen Datenpakete, die noch in Kopie in der Vermittlungseinrichtung Verm1 festgehalten sind, erneut zu der Vermittlungseinrichtung Verm2 übertragen.

Bisher wurde als Beispiel lediglich der Fall betrachtet, daß bei einer eingerichteten virtuellen Verbindung Datenpakete von einer rufenden Teilnehmereinrichtung zu einer gerufenen Teilnehmereinrichtung hin übertragen werden. Bei einer bidirektionalen virtuellen Verbindung, wie es bei einer Verbindung gemäß der CCITT-Empfehlung X.25 der Fall ist, werden auch die in Gegenrichtung übertragenen Datenpakete in der oben angegebenen Weise innerhalb des Paketvermittlungsnetztes PVN2 transparent in Datenpaketen der Ersatzverbindung übertragen. Darüber hinaus ist bei dem zuvor erläuterten Ausführungsbeispiel für diese Gegenrichtung in der Vermittlungseinrichtung Verm2 ein Sendezähler, in der Vermittlungseinrichtung Verm1 dagegen ein zugehöriger Empfangszähler geführt. Bei dem Wiedereinrichten einer zunächst über einen Ersatzweg geführten virtuellen Verbindung ausschließlich innerhalb des Paketvermittlungsnetzes PVN1 werden dabei in dem oben erwähnten Rufpaket, beispielsweise in dessen Benutzerdatenfeld, Angaben bezüglich des momentanen Zählerstandes des Empfangszählers zu der Vermittlungseinrichtung Verm2 hin übertragen, um anhand dieser Angaben eine oben beschriebene Resynchronisation der Sende- und Empfangszähler zu erreichen.

Abschließend sei noch darauf hingewiesen, daß zwar vorstehend am Beispiel einer zwischen den Teilnehmereinrichtungen DTE11 und DTE21 eines privaten Paketvermittlungsnetzes PVN1 verlaufenden virtuellen Verbindungen das ersatzweise Einrichten einer solchen virtuellen Verbindung unter Einbeziehung eines öffentlichen Paketvermittlungsnetzes PVN2 unter Berücksichtigung der CCITT-Empfehlung X.25 und des oben erwähnten Trunkprotokolls erläutert worden ist. Das vorstehend beschriebene Verfahren ist jedoch allgemein immer dann anwendbar, wenn innerhalb eines Paketvermittlungsnetzes beispielsweise bei Ausfall von Verbindungsleitungen ein geeigneter Verbindungsweg für virtuelle Verbindungen zeitweilig nicht vorhanden ist und dieses Paketvermittlungsnetz mit einem weiteren Paketvermittlungsnetz über Übergangsstellen in Verbindung steht. Dabei können in den beiden Paketvermittlungsnetzen auch von der genannten CCITT-Empfehlung und dem Trunkprotokoll abweichende Signalisierungsprozeduren vorgesehen sein.

## Patentansprüche

1. Verfahren zum Einrichten von virtuellen Verbindungen zwischen an verschiedenen Vermittlungseinrichtungen (Verml, Verm2) eines ersten Paketvermittlungsnetzes (PVN1) angeschlossenen rufenden und gerufenen Teilnehmereinrichtungen (DTE11, DTE21) nach Maßgabe von die gerufenen Teilnehmereinrichtungen bezeichnenden Adresseninformationen, welche in Adressenfeldern von Rufpaketen übertragen werden, wobei wenigstens eine erste Netzübergangsstelle (UE1) von einer der Vermittlungseinrichtungen (Verm1) des ersten Paketvermittlungsnetzes (PVN1) zu einem zweiten Paketvermittlungsnetz (PVN2) sowie wenigstens eine zweite Netzübergangsstelle (UE2) von dem zweiten Paketvermittlungsnetz zu einer von der genannten einen Vermittlungseinrichtung verschiedenen Vermittlungseinrichtung (Verm2) des ersten Paketvermittlungsnetzes vorgesehen sind,
wobei in den mit einer ersten Netzübergangsstelle versehenen Vermittlungseinrichtungen (Verm1, Verm2) des ersten Paketvermittlungsnetzes eine die jeweilige zweite Netzübergangsstelle (UE2) bezeichnende Adresseninformation hinterlegt wird,
wobei bei Auftreten eines Rufpaketes, mit welchem das Einrichten einer virtuellen Verbindung innerhalb des ersten Paketvermittlungsnetzes (PVN1) von einer rufenden Teilnehmereinrichtung (DTE11) her gewünscht wird, in der mit einer ersten Netzübergangsstelle versehenen Vermittlungseinrichtung (Verm1) zunächst eine Wegesuche nach einem Verbindungsweg innerhalb des ersten Paketvermittlungsnetzes nach Maßgabe der in dem Adressenfeld des betreffenden Rufpaketes enthaltenen Adresseninformation durchgeführt wird und wobei bei Nichtvorhandensein eines derartigen Verbindungsweges innerhalb des ersten Paketvermittlungsnetzes (PVN1) ein Ersatzweg über das zweite Paketvermittlungsnetz (PVN2) unter Einbeziehung der jeweiligen ersten und der jeweiligen zweiten Netzübergangsstelle (UE1, UE2) eingerichtet wird,
**dadurch gekennzeichnet**,
daß für das Einrichten des Ersatzweges das gerade aufgetretene Rufpaket zunächst an der jeweiligen ersten Netzübergangsstelle (UE1) festgehalten und auf dieses Rufpaket hin zunächst über diese erste Netzübergangsstelle ein gesonderter Aufbau einer virtuellen Ersatzverbindung in dem zweiten Paketvermittlungsnetz zu der mit der jeweiligen zweiten Netzübergangsstelle (UE2) verbundenen Vermittlungseinrichtung (Verm2) nach Maßgabe einer für das zweite Paketvermittlungsnetz festgelegten Signalisierungsprozedur initiiert wird,
daß nach erfolgtem Verbindungsaufbau in wenigstens ein Datenpaket dieser virtuellen Ersatzverbindung das zunächst an der ersten Netzübergangsstelle (UE1) festgehaltene Rufpakete eingefügt und transparent innerhalb des zweiten Vermittlungsnetzes zwischen der jeweiligen ersten und der jeweiligen zweiten Netzübergangsstelle übertragen wird und daß nach Maßgabe des innerhalb des zweiten Paketvermittlungsnetzes transparent übertragenen Rufpaketes die gerade gewünschte virtuelle Verbindung zwischen der jeweiligen rufenden Teilnehmereinrichtung und der in Frage kommenden gerufenen Teilnehmereinrichtung des ersten Paketvermittlungsnetzes (PVN1) unter Berücksichtigung des in dem zweiten Paketvermittlungsnetz verlaufenden Ersatzweges eingerichtet wird.

2. Verfahren nach Anspruch 1,
**dadurch gekennzeichnet**,
daß das erste Paketvermittlungsnetz (PVN1) aus einem privaten Paketvermittlungsnetz, das zweite Paketvermittlungsnetz (PVN2) dagegen aus einem öffentlichen Paketvermittlungsnetz gebildet ist.

3. Verfahren nach Anspruch 1 oder 2,
**dadurch gekennzeichnet**,
daß nach erfolgtem Aufbau der virtuellen Ersatzverbindung zwischen einer rufenden und einer gerufenen Teilnehmereinrichtung (DTE11, DTE21) zu übertragende Datenpakete ebenfalls in Datenpakete der virtuellen Ersatzverbindung eingefügt und transparent innerhalb des zweiten Paketvermittlungsnetzes (PVN2) übertragen werden.

4. Verfahren nach einem der Ansprüche 1 bis 3,
**dadurch gekennzeichnet**,
daß für den Fall, daß das für das erste Paketvermittlungsnetz (PVN1) festgelegte Rufpaket bzw. die in dem ersten Paketvermittlungsnetz übertragenen Datenpakete gegenüber den in dem zweiten Paketvermittlungsnetz (PVN2) übertragbaren Datenpaketen eine größere Länge aufweisen, das Rufpaket bzw. die Datenpakete segmentiert und die Segmente in einer Mehrzahl von Datenpaketen transparent innerhalb des zweiten Paketevermittlungsnetzes übertragen werden.

## Claims

1. Method for setting up virtual connections between calling and called subscriber devices (DTE11, DTE21) which are connected to different switching centres (Verm1, Verm2) in a first packet switching network (PVN1), on the basis of address information which designates the called subscriber devices that is transmitted in the address fields of ringing packets, in which case at least one first network gateway (UE1) is provided from one of the switching centres (Verm1) in the first packet switching network (PVN1) to a second packet switching network (PVN2), and at least one second network gateway (UE2) is provided from the second packet switching network to a switching centre (Verm2) in the first packet switching network, which switching centre (Verm2) is different from the said one switching centre,
in which case an address information item which designates the respective second network gateway (UE2) is stored in those switching centres (Verm1, Verm2) in the first packet switching network which are provided with a first network gateway,
in which case, when a ringing packet occurs on the basis of which there is a desire to set up a virtual connection within the first packet switching network (PVN1) from a calling subscriber device (DTE11), a routing search is first of all carried out, in the switching centre (Verm1) that is provided with a first network gateway, for a connecting route within the first packet switching network based on the address information item contained in the address field of the relevant ringing packet,
and in which case, if such a connecting route does not exist within the first packet switching network (PVN1), a substitute route is set up via the second packet switching network (PVN2) including the respective first and the respective second network gateway (UE1, UE2), characterized
in that, in order to set up the substitute route, the ringing packet which is currently occurring is initially held at the respective first network gateway (UE1), and a separate process of setting up a virtual substitute connection is initiated first of all, for this ringing packet, via this first network gateway, in the second packet switching network for that switching centre (Verm 2) which is connected to the respective second network gateway (UE2), on the basis of a signalling procedure which is defined for the second packet switching network,
in that, after a connection has been set up, the ringing packets which have initially been held at the first network gateway (UE1) are inserted into at least one data packet of this virtual substitute connection and are transmitted in a transparent manner within the second switching network between the respective first and the respective second network gateway,
and in that, based on the ringing packet which is transmitted in a transparent manner within the second packet switching network, the currently desired virtual connection between the respective calling subscriber device and the subscriber device in question which is being called in the first packet switching network (PVN1) is set up taking account of the substitute route running in the second packet switching network.

2. Method according to Claim 1,
characterized
in that the first packet switching network (PVN1) is formed from a private packet switching network, while, in contrast, the second packet switching network (PVN2) is formed from a public packet switching network.

3. Method according to Claim 1 or 2,
characterized
in that, once the virtual substitute connection has been set up, data packets which are to be transmitted between a calling subscriber device (DTE11) and a called subscriber device (DTE21) are likewise inserted into the data packets of the virtual substitute connection, and are transmitted in a transparent manner within the second packet switching network (PVN2).

4. Method according to one of Claims 1 to 3,
characterized
in that, for the situation in which the ringing packet which is defined for the first packet switching network (PVN1) and/or the data packets transmitted in the first packet switching network have a greater length than the data packets which can be transmitted in the second packet switching network (PVN2), the ringing packet and/or the data packets are/is segmented, and the segments are transmitted in a plurality of data packets, in a transparent manner, within the second packet switching network.

## Revendications

1. Procédé pour établir des connexions virtuelles entre des postes d'abonnés appelants et appelés (DTE11, DTE21), raccordés à différents centres de commutation (Verm1, Verm2) d'un premier réseau de commutation par paquets (PVN1), en fonction d'informations d'adresse qui désignent les postes d'abonnés appelés et qui sont transmises dans des champs d'adresse de paquets d'appel, au moins une première passerelle (UE1) étant prévue de l'un des centres de commutation (Verm1) du premier réseau de commutation par paquets (PVN1) à un deuxième réseau de commutation par paquets (PVN2) et au moins une deuxième passerelle (UE2) étant prévue du deuxième réseau de commutation par paquets vers un centre de commutation (Verm2), différent du premier centre de commutation mentionné, du premier réseau de commutation par paquets, dans lequel
on enregistre dans les centres de commutation (Verm1, Verm2), munis d'une première passerelle, du premier réseau de commutation par paquets, une information d'adresse désignant la deuxième passerelle (UE2) respective,
à l'arrivée d'un paquet d'appel avec lequel l'établissement d'une connexion virtuelle à l'intérieur du premier réseau de commutation par paquets (PVN1) à partir d'un poste d'abonné appelant (DTE11) est souhaité, on effectue d'abord dans le centre de commutation (Verm1), muni d'une première passerelle, une recherche d'une voie de connexion à l'intérieur du premier réseau de commutation par paquets en fonction de l'information d'adresse contenue dans le champ d'adresse du paquet d'appel considéré
et, en cas d'absence d'une voie de connexion de ce genre à l'intérieur du premier réseau de commutation par paquets (PVN1), on établit une voie détournée via le deuxième réseau de commutation par paquets (PVN2) en incluant les première et deuxième passerelles (UE1, UE2) respectives,
caractérisé par le fait que
pour l'établissement de la voie détournée, on garde d'abord le paquet d'appel justement arrivé dans la première passerelle (UE1) respective et, suite à ce paquet d'appel, on déclenche d'abord par l'intermédiaire de cette première passerelle un établissement spécial d'une connexion virtuelle détournée dans le deuxième réseau de commutation par paquets vers le centre de commutation (Verm2) relié à la deuxième passerelle (UE2) respective selon une procédure de signalisation spécifiée pour le deuxième réseau de commutation par paquets,
une fois l'établissement de connexion effectué, on insère dans au moins un paquet de données de cette connexion virtuelle détournée le paquet d'appel d'abord gardé dans la première passerelle (UE1) et on le transmet de manière transparente à l'intérieur du deuxième réseau de commutation par paquets entre la première passerelle respective et la deuxième passerelle respective
et, en fonction du paquet d'appel transmis de manière transparente à l'intérieur du deuxième réseau de commutation par paquets, on établit la connexion virtuelle justement souhaitée entre le poste d'abonné appelant respectif et le poste d'abonné appelé concerné du premier réseau de commutation par paquets (PVN1) en tenant compte de la voie détournée passant dans le deuxième réseau de commutation par paquets.

2. Procédé selon la revendication 1,
caractérisé par le fait que
le premier réseau de commutation par paquets (PVN1) est formé d'un réseau de commutation par paquets privé tandis que le deuxième réseau de commutation par paquets (PVN2) est formé d'un réseau de commutation par paquets public.

3. Procédé selon la revendication 1 ou 2,
caractérisé par le fait que,
une fois effectué l'établissement de la connexion virtuelle détournée, on insère également dans des paquets de données de la connexion virtuelle détournée des paquets de données à transmettre entre un poste d'abonné appelant (DTE11) et un poste d'abonné appelé (DTE21) et on les transmet de manière transparente à l'intérieur du deuxième réseau de commutation par paquets (PVN2).

4. Procédé selon l'une des revendications 1 à 3,
caractérisé par le fait que,
pour le cas où le paquet d'appel spécifié pour le premier réseau de commutation par paquets (PVN1) ou les paquets de données transmis dans le premier réseau de commutation par paquets ont une plus grande longueur que les paquets de données pouvant être transmis dans le deuxième réseau de commutation par paquets (PVN2), on segmente le paquet d'appel ou les paquets de données et on transmet les segments dans plusieurs paquets de données de manière transparente à l'intérieur du deuxième réseau de commutation par paquets.
